# EUROPEAN PATENT APPLICATION

(11) **EP 4 482 021 A1**
(43) Date of publication of application: **25.12.2024**
(21) Application number: 23210383.8
(22) Date of filing: 16.11.2023
(51) Int. Cl.: H02P 13/06, H02M 1/00, H01F 21/12, H01F 29/02

(54) **DC RAILWAY TRANSFORMATION SYSTEM AND METHOD OF OPERATING THE SAME**

(30) Priority: 23.06.2023 KR 20230080839
(71) Applicant: Korea Railroad Research Institute, Uiwang-si, Gyeonggi-do 16105 (KR)
(72) Inventor: HAN, Moon Seob, 14754 Bucheon-si (KR); PARK, Jong Young, 16365 Suwon-si (KR)
(74) Representative: Manitz Finsterwald Patent- und Rechtsanwaltspartnerschaft mbB

(57) **Abstract**

A DC railway transformation system according to an embodiment of the present disclosure includes a 3-phase switchable transformer of which a plurality of taps is connected to each primary winding wire; a tap changer which is selectively in contact with the plurality of taps connected to each primary winding wire of the 3-phase switchable transformer and regulates an output voltage of the switchable transformer; a rectifier which rectifies the output voltage of the 3-phase switchable transformer; a meter which measures an output voltage or output current of the rectifier; and a controller which outputs a control signal to control an operation of the tap changer based on the output voltage or output current measured by the meter.

## Description

### TECHNICAL FIELD

The present disclosure relates to a DC railway transformation system and a method of operating the same.

### BACKGROUND

**FIG. 1** illustrates a conventional DC railway power supply system.

As for a DC railway, 3-phase power is supplied from an electric power company and the voltage is lowered by using a rectifier transformer, and DC power is generated by using a diode rectifier and supplied to a DC electric vehicle through a railway line.

**FIG. 2** illustrates a configuration of a rectifying circuit in the conventional DC railway power supply system.

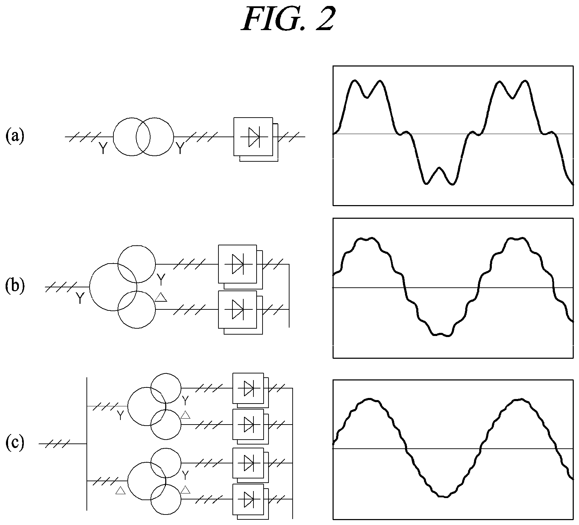

The rectifier transformer can be classified into a 6-pulse rectifying circuit (**FIG. 2(a)**) that converts a 3-phase into a 3-phase, a 12-pulse rectifying circuit (**FIG. 2(b)**) that converts a 3-phase into two 3-phases, and a 24-pulse rectifying circuit (**FIG. 2(c)**) that converts a 3-phase into four 3-phases. Each number of pulses means the number of times of rectification by a diode rectifier. As the number of pulses increases, the distortion of a rectifier input current decreases.

The most commonly used 12-pulse rectifying circuit is configured by using a rectifier transformer that converts 3-phase power received from an electric power company into Y or Δ-Y/Δ and six rectifying circuits having a phase difference of 30° with two winding wires Y and Δ on an output side. The 24-pulse rectifying circuit uses two rectifier transformers Δ-Y/Δ and Y-Y/Δ in parallel, which results in a phase difference of 15°.

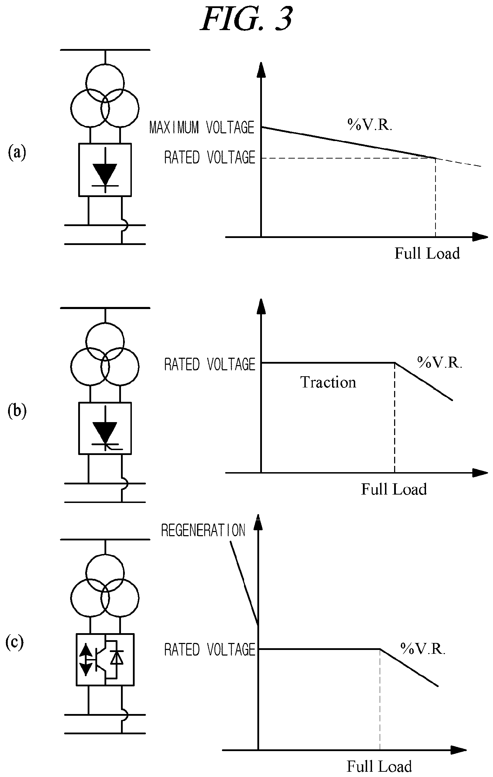

**FIG.** 3 illustrates an improved configuration of the rectifying circuit in the conventional DC railway power supply system.

In general, a diode is used for rectification. However, as shown in **FIG. 3(a)**, an increase in a load on a DC electric vehicle results in a drop in a rectifier output voltage caused by an internal resistance of a transformer. Therefore, the voltage for no load can be set to 110% of a rated voltage. To suppress a voltage drop caused by a load, a thyristor rectifier as shown in **FIG. 3(b)** may be used to output a constant voltage. Alternatively, a double-way rectifier using an IGBT as shown in **FIG. 3(c)** may be used to use regenerative power generated when the DC electric vehicle stops and to transmit DC power to the AC side. However, the thyristor rectifier and the IGBT double-way rectifier are expensive. Therefore, they have been used only in particular situations of electric railways.

The present disclosure suggests a DC railway transformation system using an electronic tap changer, which can replace the conventional thyristor rectifier or IGBT rectifier, in a DC railway system.

### Prior art document

### [Patent Document]

Korean Patent No. 10-2158490 (entitled "Device for controlling vehicle collection voltage of DC electric railway")

### SUMMARY

In view of the foregoing, the present disclosure is conceived to provide a DC railway transformation system configured to control an operation of an electronic tap changer that measures an output voltage and current of a rectifier and regulates winding wires of a switchable transformer based on the result of the measurement.

The problems to be solved by the present disclosure are not limited to the above-described problems. There may be other problems to be solved by the present disclosure.

An aspect of the present disclosure provides a DC railway transformation system, including: a 3-phase switchable transformer of which a plurality of taps is connected to each primary winding wire; a tap changer which is selectively in contact with the plurality of taps connected to each primary winding wire of the 3-phase switchable transformer and regulates an output voltage of the switchable transformer; a rectifier which rectifies the output voltage of the 3-phase switchable transformer; a meter which measures an output voltage or output current of the rectifier; and a controller which outputs a control signal to control an operation of the tap changer based on the output voltage or output current measured by the meter. Herein, the controller controls the tap changer to increase the output voltage of the 3-phase switchable transformer when the measured output voltage is lower than a first threshold value and controls the tap changer to decrease the output voltage of the 3-phase switchable transformer when the measured output voltage is equal to or higher than a second threshold value.

Another aspect of the present disclosure provides a method of operating a DC railway transformation system, including: measuring an output voltage or output current of a rectifier which rectifies an output voltage of a 3-phase switchable transformer; and regulating the output voltage of the 3-phase switchable transformer by controlling an operation of a DC railway tap changer based on the output voltage or output current measured by a meter, and the regulating process is performed to increase the output voltage of the 3-phase switchable transformer by controlling the tap changer when the measured output voltage is lower than a first threshold value and performed to decrease the output voltage of the 3-phase switchable transformer by controlling the tap changer when the measured output voltage is equal to or higher than a second threshold value.

According to the present disclosure, it is possible to minimize a drop voltage under a full load or more even without using a thyristor rectifier or an IGBT double-way rectifier placed at an output terminal of a transformer.

According to the conventional technology, a tap changer is connected to a secondary winding wire, whereas according to the present disclosure, a secondary voltage is regulated by regulating a primary winding wire, which can bring economic effects.

### BRIEF DESCRIPTION OF THE DRAWINGS

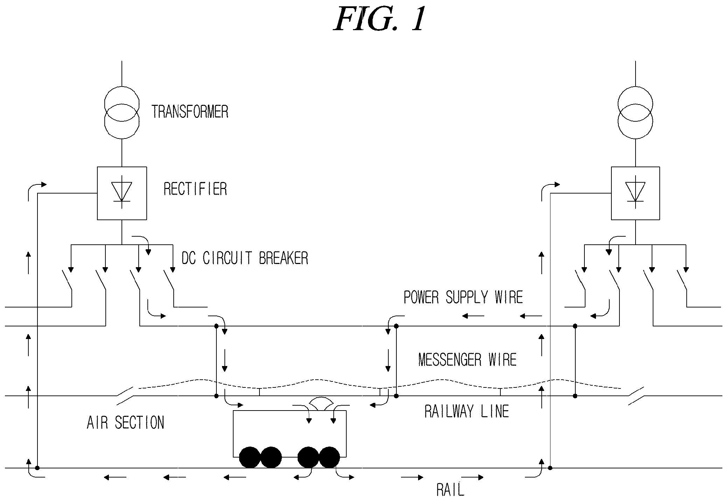

**FIG. 1** illustrates a conventional DC railway power supply system.
**FIG. 2** illustrates a configuration of a rectifying circuit in the conventional DC railway power supply system.
**FIG. 3** illustrates an improved configuration of the rectifying circuit in the conventional DC railway power supply system.

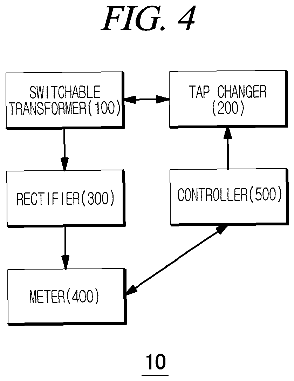

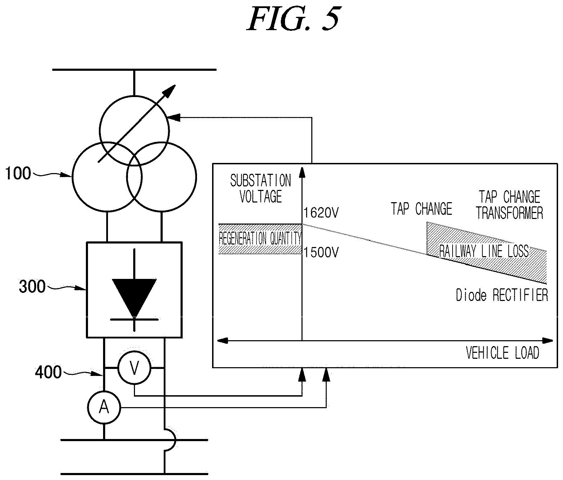

**FIG. 4** and **FIG. 5** illustrate a DC railway transformation system according to an embodiment of the present disclosure.

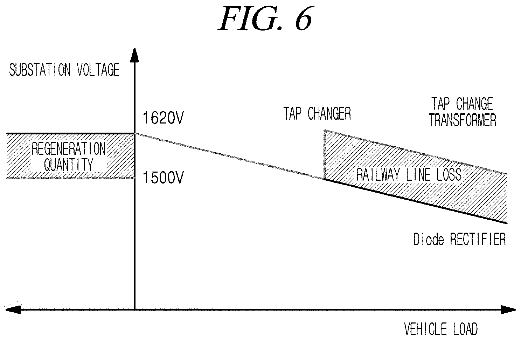

**FIG. 6** is a diagram for explaining a control operation in the DC railway transformation system according to the present disclosure.

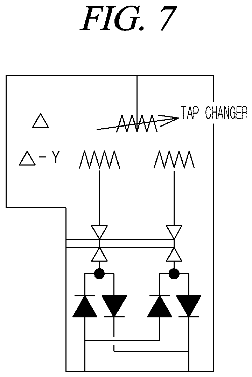

**FIG. 7** illustrates a configuration of a switchable transformer according to an embodiment of the present disclosure.

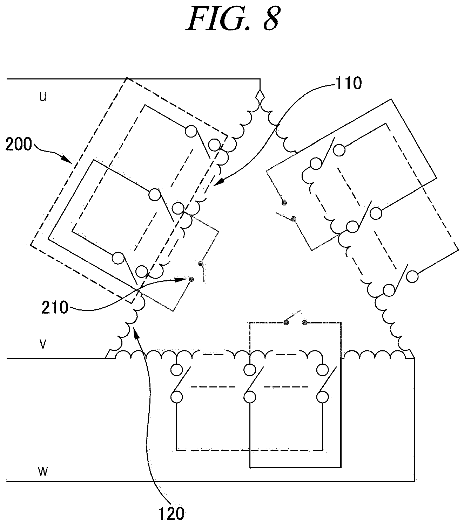

**FIG. 8** is a diagram for explaining a transformer switching operation using a tap changer according to an embodiment of the present disclosure.

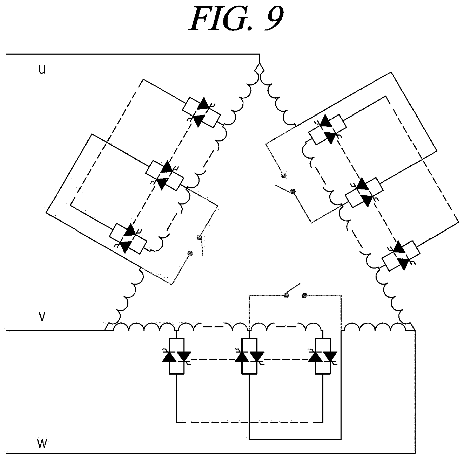

**FIG. 9** illustrates an electronic tap changer according to an embodiment of the present disclosure.

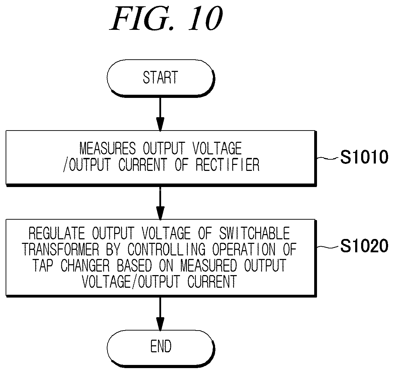

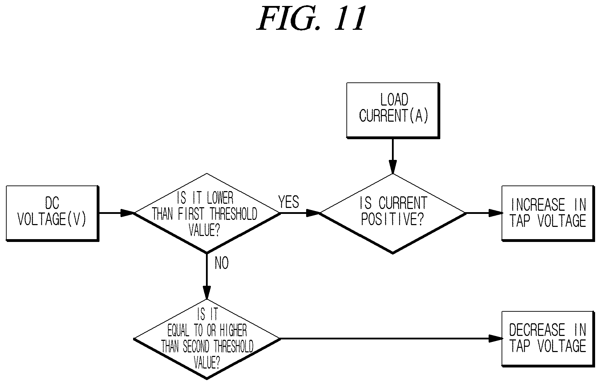

**FIG. 10** and **FIG. 11** are flowcharts showing a method of operating the DC railway transformation system according to an embodiment of the present disclosure.

### DETAILED DESCRIPTION

Hereafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected to" another element and an element being "electronically connected to" another element via another element.

Through the whole document, the term "on" that is used to designate a position of one element with respect to another element includes both a case that the one element is adjacent to the other element and a case that any other element exists between these two elements.

Further, through the whole document, the term "comprises or includes" and/or "comprising or including" used in the document means that one or more other components, steps, operation and/or existence or addition of elements are not excluded in addition to the described components, steps, operation and/or elements unless context dictates otherwise. Through the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party. Through the whole document, the term "step of" does not mean "step for".

Through the whole document, the term "unit" includes a unit implemented by hardware or software and a unit implemented by both of them. One unit may be implemented by two or more pieces of hardware, and two or more units may be implemented by one piece of hardware. Meanwhile, the units are not limited to the software or the hardware, and each of the units may be stored in an addressable storage medium or may be configured to implement one or more processors. Accordingly, the units may include, for example, software, object-oriented software, classes, tasks, processes, functions, attributes, procedures, sub-routines, segments of program codes, drivers, firmware, micro codes, circuits, data, database, data structures, tables, arrays, variables and the like. The components and the functions of the units can be combined with each other or can be divided up into additional components and units.

Hereafter, exemplary embodiments of the present disclosure will be described in detail with reference to the accompanying drawings and description. However, the present disclosure is not limited to the following embodiments and can be embodied in a different form. Like reference numerals generally denote like elements throughout the present specification.

**FIG. 4** and **FIG. 5** illustrate a DC railway transformation system according to an embodiment of the present disclosure.

The present disclosure suggests a DC railway transformation system 10 using an electronic tap changer, which can replace the conventional thyristor rectifier or IGBT rectifier, in a DC railway system. According to the present disclosure, it is possible to control an operation of the electronic tap changer that measures an output voltage and current of a rectifier and regulates winding wires of a switchable transformer based on the result of the measurement.

That is, the electronic tap changer is controlled such that the voltage is set to a rated voltage at a current under a full load or less based on the result of the measurement of the output voltage and current of the rectifier and the voltage is dropped in proportion to an internal resistance R of the transformer under the full load or more.

Referring to **FIG. 4**, the DC railway transformation system 10 of the present disclosure includes a switchable transformer 100, a tap changer 200, a rectifier 300, a meter 400, and a controller 500.

The switchable transformer 100 is a 3-phase switchable transformer of which a plurality of taps is connected to each primary winding wire.

The tap changer 200 is selectively in contact with the plurality of taps connected to each primary winding wire of the 3-phase switchable transformer and regulates an output voltage of the switchable transformer 100.

The rectifier 300 rectifies the output voltage of the switchable transformer 100.

The meter 400 measures an output voltage or output current of the rectifier 300.

The controller 500 outputs a control signal to control an operation of the tap changer 200 based on the output voltage or output current measured by the meter 400. The controller 500 controls the tap changer 200 to increase the output voltage of the 3-phase switchable transformer 100 when the measured output voltage is lower than a first threshold value and controls the tap changer 200 to decrease the output voltage of the 3-phase switchable transformer 100 when the measured output voltage is equal to or higher than a second threshold value. In this case, the first threshold value is set to be lower than the second threshold value.

**FIG. 5** illustrates the DC railway transformation system 10 of the present disclosure in more detail, and **FIG. 6** is a diagram for explaining a control operation in the DC railway transformation system 10 according to the present disclosure.

Referring to **FIG. 5**, the controller 500 controls the electronic tap changer 200 such that the voltage is set to a rated voltage at a current under a full load or less based on the output voltage and output current of the rectifier 300 measured by the meter 400 and the voltage is dropped in proportion to an internal resistance R of the transformer under the full load or more.

Changes in load according to the present disclosure will be described below with reference to **FIG. 6****.**

The whole operation may be classified into an operation when the electric vehicle runs and an operation when the electric vehicle stops.

If no load is applied when the electric vehicle runs, a rated voltage of a substation is set to 110% of a voltage of the vehicle. If a load increases when the electric vehicle runs, the tap changer 200 is operated to increase a secondary voltage of the transformer (decrease the primary winding wire) and thus increase an input voltage of the electric vehicle and improve the efficiency of the electric vehicle. Therefore, even when the electric vehicle is far away from the substation, the tap changer 200 can decrease a current flowing through a railway line and significantly decrease heat loss.

Also, when the electric vehicle stops, a motor of the electric vehicle generates electric energy and a secondary voltage is lowered to 100% or less of the voltage by a tap change (increasing the primary winding wire), and, thus, a starting voltage for electricity generation of the electric vehicle is lowered. Therefore, the power generation amount in a regeneration mode can be increased and the power production amount can be increased.

In a conventional case, electricity generation starts at 110% of a substation voltage when no load is applied. When the voltage reaches 120%, electricity generated by the electric vehicle is not transmitted to the substation for the safety of the substation but dissipates through heat generation across an internal resistance of the electric vehicle. Thus, as in the present disclosure, the voltage generated in the regeneration mode can be actively utilized.

**FIG. 7** illustrates a configuration of a switchable transformer according to an embodiment of the present disclosure.

Referring to **FIG. 7**, the switchable transformer 100 consists of three winding wires including Δ wiring on a primary side and Δ wiring and Y wiring on a secondary side. However, the Y wiring can be placed on the primary side. In the present disclosure, the tap changer is connected to the wiring on the primary side and a winding wire ratio on the primary side is regulated to regulate a voltage ratio on the secondary side. That is, taps are provided in the middle of the winding wire on the primary side and are connected to each other by an electronic switch to increase or decrease the voltage.

For reference, the two winding wires on the secondary side may be connected to respective rectifiers to form a 16-pulse rectifier.

**FIG. 8** is a diagram for explaining a transformer switching operation using a tap changer according to an embodiment of the present disclosure.

**FIG. 8** illustrates a configuration in which the electronic tap changer 200 is connected to the primary side of the switchable transformer 100 in the form of a 3-phase transformer including Δ wiring.

The switchable transformer 100 includes three primary winding wires constituting the Δ wiring, and each primary winding wire includes a switchable winding wire 110 and an auxiliary winding wire 120. The switchable winding wire 110 and the auxiliary winding wire 120 are separated from each other, but may be connected to each other by the electronic tap changer 200.

The electronic tap changer 200 includes a plurality of taps connected to different locations of the switchable winding wire 110 as the primary winding wire and a plurality of switching elements connected to the plurality of taps, respectively. One terminals of the plurality of switching elements are connected to the auxiliary winding wire 120 and the other terminals of the switching elements are connected to the taps. When any one of the plurality of switching elements is turned on, a tap connected to the switching element is connected to the auxiliary winding wire 120. The electronic tap changer 200 uses a switching element which is turned on by an electric signal, and, thus, the primary winding wire increases or decreases, which results in an increase or decrease in the secondary voltage.

That is, according to the configuration of the transformer, when a tap change is performed to increase the primary winding wire, the secondary voltage is decreased, and when a tap change is performed to decrease the primary winding wire, the secondary voltage is increased.

When a tap located in the middle of a winding wire among the plurality of taps is selected, a rated voltage is output as a reference voltage.

Hereafter, a detailed operation of the controller 500 will be described. Under a full load or less, the electronic tap changer 200 is switched to a center tap to supply the rated voltage. Under a full load or more, the auxiliary winding wire 120 is switched to an adjacent tap to decrease the primary winding wire and thus to increase the secondary voltage in consideration of a voltage drop.

The electronic tap changer 200 may be further connected to a mechanical breaker 210. This is to suppress a breakdown of the electronic tap changer 200. The mechanical breaker 210 is configured to connect a center tap of the switchable winding wire 110 to the auxiliary winding wire 120, and maintains a turn-off state in a normal state. When the electronic tap changer 200 breaks down, the mechanical breaker 210 is operated to connect the center tap of the switchable winding wire 110 to the auxiliary winding wire 120. Thus, the primary winding wire supplies the rated voltage.

**FIG. 9** illustrates the electronic tap changer 200 according to an embodiment of the present disclosure. The electronic tap changer 200 shown in **FIG. 9** has a similar structure to the tap changer shown in **FIG. 8****,** and the switching elements included in the electronic tap changer 200 are implemented with thyristors.

**FIG. 10** and **FIG. 11** are flowcharts showing a method of operating the DC railway transformation system according to an embodiment of the present disclosure.

Referring to **FIG. 10****,** the DC railway transformation system 10 measures an output voltage or output current of the rectifier 300 which rectifies an output voltage of the 3-phase switchable transformer 100 (S1010).

The output voltage of the 3-phase switchable transformer 100 is regulated by controlling an operation of the DC railway tap changer 200 based on the output voltage or output current measured by the meter 400 (S1020).

As shown in **FIG. 11**, when the output voltage of the rectifier 300 measured by the meter 400 is lower than a first threshold voltage (for example, 1500 V), the tap changer 200 is operated to decrease the primary winding wire and thus to increase the voltage supplied to the DC railway (the secondary voltage of the transformer). Therefore, the secondary voltage is increased. In this case, if a load current is positive when the load current is compared to the threshold value, the tap changer 200 can be operated.

Also, if the measured voltage is equal to or higher than the second threshold value (for example, 1620 V), the tap changer 200 is operated to decrease the voltage supplied to the DC railway (the secondary voltage of the transformer) and thus to increase the primary winding wire. Therefore, the secondary voltage is decreased.

The embodiment of the present disclosure can be embodied in a storage medium including instruction codes executable by a computer such as a program module executed by the computer. A computer-readable medium can be any usable medium which can be accessed by the computer and includes all volatile/non-volatile and removable/non-removable media. Further, the computer-readable medium may include all computer storage media. The computer storage media include all volatile/non-volatile and removable/non-removable media embodied by a certain method or technology for storing information such as computer-readable instruction code, a data structure, a program module or other data.

The method and system of the present disclosure have been explained in relation to a specific embodiment, but their components or a part or all of their operations can be embodied by using a computer system having general-purpose hardware architecture.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A DC railway transformation system, comprising:
a 3-phase switchable transformer of which a plurality of taps is connected to each primary winding wire;
a tap changer which is selectively in contact with the plurality of taps connected to each primary winding wire of the 3-phase switchable transformer and regulates an output voltage of the switchable transformer;
a rectifier which rectifies the output voltage of the 3-phase switchable transformer;
a meter which measures an output voltage or output current of the rectifier; and
a controller which outputs a control signal to control an operation of the tap changer based on the output voltage or output current measured by the meter,
wherein the controller controls the tap changer to increase the output voltage of the 3-phase switchable transformer when the measured output voltage is lower than a first threshold value and controls the tap changer to decrease the output voltage of the 3-phase switchable transformer when the measured output voltage is equal to or higher than a second threshold value.

2. The DC railway transformation system of Claim 1,
wherein the controller controls the tap changer to decrease the number of the primary winding wires when the measured output voltage is lower than the first threshold value and controls the tap changer to increase the number of the primary winding wires when the measured output voltage is equal to or higher than the second threshold value.

3. The DC railway transformation system of Claim 1,
wherein the switchable transformer includes three primary winding wires constituting Δ wiring, and each primary winding wire includes a switchable winding wire and an auxiliary winding wire,
the tap changer includes a plurality of taps connected to different locations of the switchable winding wire and a plurality of switching elements which connects one terminals of the auxiliary winding wires to the plurality of taps, respectively, and
when any one of the plurality of switching elements is turned on, a tap connected to the switching element is selectively connected to the auxiliary winding wire.

4. The DC railway transformation system of Claim 3, further comprising:
a mechanical breaker configured to connect a center tap of the switchable winding wire to the auxiliary winding wire.

5. The DC railway transformation system of Claim 3,
wherein the plurality of switching elements are thyristors.

6. A method of operating a DC railway transformation system, comprising:
measuring an output voltage or output current of a rectifier which rectifies an output voltage of a 3-phase switchable transformer; and
regulating the output voltage of the 3-phase switchable transformer by controlling an operation of a DC railway tap changer based on the output voltage or output current measured by a meter,
wherein the regulating process is performed to increase the output voltage of the 3-phase switchable transformer by controlling the tap changer when the measured output voltage is lower than a first threshold value and performed to decrease the output voltage of the 3-phase switchable transformer by controlling the tap changer when the measured output voltage is equal to or higher than a second threshold value.

7. The method of operating a DC railway transformation system of Claim 6,
wherein the regulating process is performed to decrease the number of the primary winding wires by controlling the tap changer when the measured output voltage is lower than the first threshold value and performed to increase the output voltage of the number of the primary winding wires by controlling the tap changer when the measured output voltage is equal to or higher than the second threshold value.
